(19) Europäisches Patentamt / European Patent Office / Office européen des brevets

(11) **EP 1 337 861 B1**

(12) **EUROPÄISCHE PATENTSCHRIFT**

(45) Veröffentlichungstag und Bekanntmachung des Hinweises auf die Patenterteilung:
**23.09.2009   Patentblatt 2009/39**

(51) Int Cl.:
*G01P 15/08* (2006.01)   *G01C 19/56* (2006.01)

(21) Anmeldenummer: **01998839.3**

(86) Internationale Anmeldenummer:
**PCT/EP2001/014022**

(22) Anmeldetag: **30.11.2001**

(87) Internationale Veröffentlichungsnummer:
**WO 2002/044741 (06.06.2002 Gazette 2002/23)**

(54) **VERFAHREN UND VORRICHTUNG ZUR VERARBEITUNG VON ANALOGEN AUSGANGSSIGNALEN VON KAPAZITIVEN SENSOREN**

METHOD AND DEVICE FOR PROCESSING ANALOGUE OUTPUT SIGNALS FROM CAPACITIVE SENSORS

PROCEDE ET DISPOSITIF POUR TRAITER DES SIGNAUX DE SORTIE ANALOGIQUES DE CAPTEURS CAPACITIFS

(84) Benannte Vertragsstaaten:
**AT BE CH CY DK ES FI FR GB GR IE IT LI LU MC NL PT SE TR**

(30) Priorität: **01.12.2000   DE 10059775**

(43) Veröffentlichungstag der Anmeldung:
**27.08.2003   Patentblatt 2003/35**

(73) Patentinhaber: **Hahn-Schickard-Gesellschaft für angewandte Forschung e.V.**
**78052 Villingen-Schwenningen (DE)**

(72) Erfinder:
• **GEIGER, Wolfram**
  **79112 Tiengen (DE)**
• **GAISSER, Alexander**
  **87267 Aach (DE)**

• **NIKLASCH, Norbert**
  **80689 München (DE)**

(74) Vertreter: **Zinkler, Franz**
**Schoppe, Zimmermann, Stöckeler & Zinkler**
**Patentanwälte**
**Postfach 246**
**82043 Pullach bei München (DE)**

(56) Entgegenhaltungen:
**US-A- 5 495 204          US-A- 5 627 318**

• **KIRSTEN J ET AL: "UNDERSAMPLING REDUCES DATA ACQUISITION COSTS" ELECTRONIC ENGINEERING, MORGAN-GRAMPIAN LTD. LONDON, GB, Bd. 63, Nr. 775, 1. Juli 1991 (1991-07-01), Seiten 39,-40,43, XP000240131 ISSN: 0013-4902**

**Beschreibung**

Die vorliegende Erfindung bezieht sich auf das Auslesen von Sensoren und insbesondere die digitale Verarbeitung von Sensorausgangssignalen, die ein hochfrequentes Trägersignal aufweisen, das durch eine Meßgröße moduliert ist. Bei der folgenden Beschreibung der vorliegenden Erfindung wird dabei zur Erläuterung des erfindungsgemäßen Konzepts auf kapazitive Sensorelemente bezug genommen, wie z.B. auf mikromechanische Drehratensensoren, die die Coriolis-Kraft zur Bestimmung einer zu erfassenden Drehrate ausnutzen.

Kapazitive Sensoren, wie z.B. mikromechanische Drehratensensoren, besitzen vielfältige Anwendungsmöglichkeiten. So werden mikromechanische Drehratensensoren beispielsweise bei Robotern und Montagesystemen, in der Medizintechnik, in Kameras zur Bildstabilisierung, bei Navigationssystemen, zur Stabilisierung und Fernsteuerung von Straßen- und Luftfahrzeugen, und auch bei Airbag- und Schutzsystemen eingesetzt. Im allgemeinen besitzen solche Sensoren eine bewegliche mechanische Struktur, welche zu einer periodischen Schwingung angeregt wird. Diese periodische, durch Anregung erzeugte Schwingung wird als Primärschwingung bezeichnet. Erfährt der Sensor eine Drehung um eine Achse senkrecht zur Primärschwingung oder Primärbewegung, so führt die Bewegung der Primärschwingung zu einer Coriolis-Kraft, die proportional zur Meßgröße, d.h. der Winkelgeschwindigkeit, ist. Durch die Coriolis-Kraft wird eine zweite, zur Primärschwingung orthogonale Schwingung angeregt. Diese zweite, zur Primärschwingung orthogonale Schwingung wird Sekundärschwingung genannt. Die Sekundärschwingung, die auch als Detektionsschwingung bezeichnet wird, kann beispielsweise durch ein kapazitives Meßverfahren erfaßt werden, wobei die kapazitiv erfaßte Meßgröße als Maß für die auf den Drehratensensor wirkende Drehrate dient.

Bei mikrotechnischen Sensoren ist dabei die elektronische Signalauswertung des Sensorausgangssignals von großer Bedeutung, da die Leistungsfähigkeit des gesamten Sensorsystems zu einem großen Teil durch die verwendete Auslese- und Auswerteelektronik bestimmt wird. Aufgrund der geringen Abmessungen der mikromechanischen Struktur gegenwärtiger Drehratensensoren, wie z.B. des Drehratensensors DAVED®, der vom Institut für Mikro- und Informationstechnik der Hahn-Schickard-Gesellschaft e.V. entwickelt wurde, müssen sehr kleine Kapazitäten bzw. Kapazitätsänderungen bis in einen Bereich von etwa $10^{-18}$ F erfaßt werden, so daß man als Sensorausgangssignale nur sehr kleine Spannungen erhält, die jedoch nicht direkt ausgewertet werden können.

Bei mikromechanischen Drehratensensoren wird dieses Sensorausgangssignal vor allem durch das Rauschen der elektronischen Komponenten der Auswerteelektronik begrenzt, da die eigentlichen Informationen, die im Sensorausgangssignal des Drehratensensors enthalten sind, unter einem bestimmten Pegel nicht mehr vom Rauschen zu unterscheiden sind und dann nicht mehr erfaßt werden können.

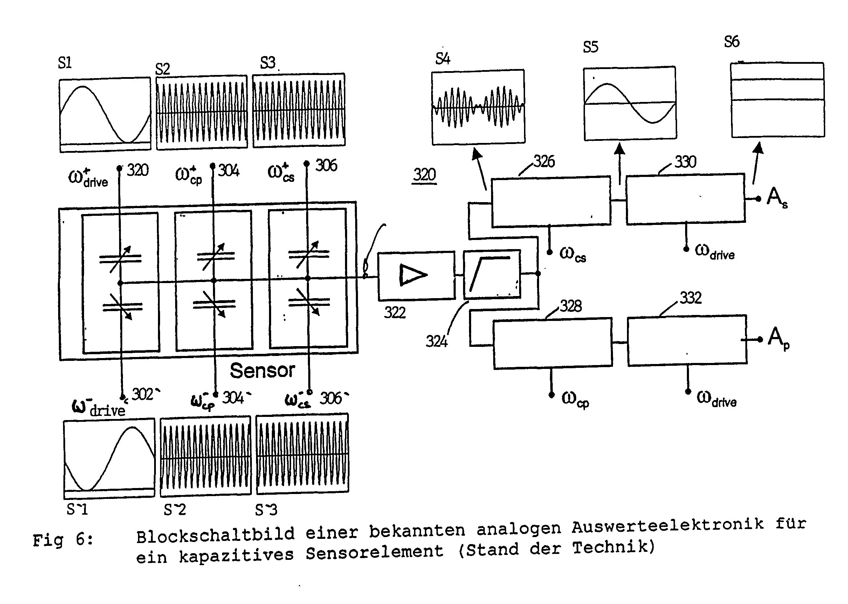

Fig. 6 zeigt das Blockschaltbild einer beispielhaften bekannten kapazitiven Sensoranordnung 300 in Form eines kapazitiven Drehratensensors mit einer angeschlossenen elektronischen Signalauswerteanordnung 320, um die kapazitiv erfaßte Meßgröße, d.h. die auf die Sensoranordnung 300 wirkende Drehrate, zu erfassen und auszuwerten.

Das schematisch in Fig. 6 dargestellte kapazitive Sensorelement 300 weist drei Eingangselektrodenpaare auf, wobei an dem Treibereingangselektrodenpaar 302, 302' Treibereingangssignale S1, S'1 mit der Frequenz $\omega^+_{drive}$, $\omega^-_{drive}$ eingegeben werden, an dem Elektrodenpaar 304, 304' primäre Trägersignale S2, S'2 mit der Frequenz $\omega^+_{cp}$, $\omega^-_{cp}$ eingegeben werden, und an dem Elektrodenpaar 306, 306' sekundäre Trägersignale S3, S'3 mit der Frequenz $\omega^+_{cs}$, $\omega^-_{cs}$ eingegeben werden. Die Indizes (+/-) geben dabei eine Phasenverschiebung der jeweiligen Signale von 180° an, so daß das Signal S1 um 180° zu S'1, das Signal S2 um 180° zu S'2 und das Signal S3 um 180° zu S'3 phasenverschoben ist. Aufgrund interner Modulationsvorgänge in dem Sensorelement ist das eigentliche Sensorausgangssignal an dem Ausgang 308 des Sensorelements ein analoges Signal, welches die Informationen über die erfaßte Meßgröße, z.B. über die vorhandene Drehrate, beinhaltet, wobei das analoge Signal ein Trägersignal mit einer Trägerfrequenz $\omega_c$ aufweist, das durch die Meßgröße moduliert ist.

Durch die Verwendung von hochfrequenten Trägersignalen kann das Signal/Rausch-Verhältnis des Sensorausgangssignals deutlich verbessert werden, wobei bei der Realisierung der Signalauswerteelektronik mit analogen Komponenten die Rückgewinnung des Nutzsignals aus dem amplitudenmodulierten Sensorausgangssignal durch eine zweifache Demodulation in der Signalauswerteelektronik 320 vorgenommen wird.

Das amplitudenmodulierte Sensorausgangssignal wird dabei einem (analogen) Operationsverstärker 322 zur Verstärkung zugeführt. Das verstärkte Sensorausgangssignal wird dann einem Hochpaßfilter 324 zugeführt, um einen Gleichanteil, wie z.B. einen DC-Offset des Operationsverstärkers, und niederfrequente Anteile, wie z.B. $\omega_{drive}$, $2 *\omega_{drive}$, des analogen Sensorausgangssignals auszufiltern. Der Signalverlauf des verstärkten analogen Sensorausgangssignal ist als Verlauf S4 in Fig. 6 dargestellt. Das Ausgangssignal des Hochpaßfilters 324 wird einem ersten Demodulator (Multiplizierer I) 326 zugeführt, der eine erste Demodulation (Multiplikation) des Signals S4 mit dem hochfrequenten Trägersignal S3 realisiert. Diese Multiplikation wird durch einen Vierquadranten-Differenzverstärker realisiert, der beide Halbwellen des Eingangssignals zur Multiplikation verwendet. Als Ergebnis erhält man ein sinusförmiges Wechselsignal S5, dessen Amplitude direkt proportional zu der erfaßten Meßgröße, d.h. zur Drehrate, ist.

Das Signal S5 wird daraufhin einem zweiten Demodulator (Multiplizierer II) 330 zugeführt, der bei der zweiten Demodulation das sinusförmige Signal S5 in ein Gleichsignal bzw. eine Gleichspannung S6 umwandelt, das/die direkt proportional zur Amplitude des Wechselsignals und damit proportional zur Meßgröße ist. Diese Multiplikation geschieht mit einer niederfrequenten Wechselspannung, welche zur Treiberspannung S1 phasenverschoben ist.

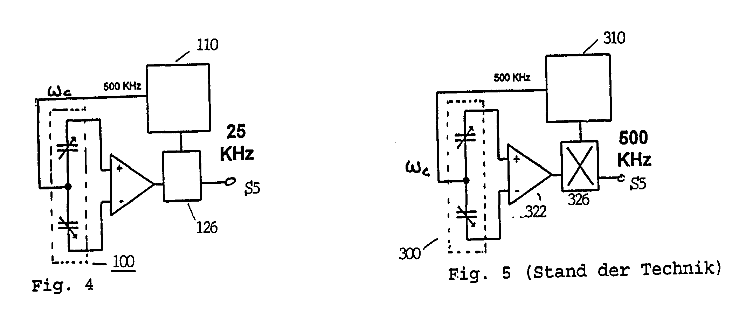

Um das oben beschriebene, bekannte Verfahren zum Auslesen und Auswerten eines analogen Sensorausgangssignals noch zu verdeutlichen und um dasselbe später dem erfindungsgemäßen Auslese- und Auswertekonzept einfacher gegenüberstellen zu können, ist das Prinzip des Auslese- und Auswerteverfahrens gemäß dem Stand der Technik nochmals zusammengefaßt in Fig. 5 dargestellt.

Das Trägersignal $\omega_c$ (z.B. 500 kHz) wird von einer Signalquelle 310 in der Mitte in den kapazitiven Sensor 300 eingespeist. Die Signalquelle 310 ist ein Oszillator mit einer Träger- und Referenzsignalerzeugung. Das Ausgangssignal des Sensors 300 wird differentiell ausgelesen und in dem Operationsverstärker 322 verstärkt. Das verstärkte Ausgangssignal wird nun dem Multiplizierer 326 zugeführt, der das verstärkte, analoge Sensorausgangssignal demoduliert, indem dasselbe mit dem Referenzsignal (500 kHz) aus der Signalquelle 310 multipliziert wird. Am Ausgang des Multiplizierers 326 liegt dann der Signalverlauf S5 (vgl. Fig. 6) an.

Ein gravierendes Problem bezüglich dieser Anordnung besteht nun darin, daß die erste Demodulation des Sensorsignals mit den hochfrequenten Trägersignalen (z.B. 500 kHz) durchgeführt werden muß. Bei einer Überabtastung (Oversampling) der Trägersignale müßte ein digitaler Signalprozessor daher mit einer Taktfrequenz arbeiten, die größer als die doppelte Trägerfrequenz ist, was mit heutigen digitalen Signalprozessoren aufgrund der dabei anfallenden, äußerst umfangreichen Rechenoperationen nicht vernünftig zu realisieren ist.

Ein weiteres Problem bezüglich der oben beschriebenen, herkömmlichen Sensoranordnung besteht außerdem darin, daß zusätzlich zu dem Eigenrauschen des ersten (analogen) Operationsverstärkers 322 durch die elektronischen Auswertekomponenten weitere Rauschanteile und u.a. Temperaturdrift in das Nutzsignal eingebracht werden, wodurch die Auflösung und damit die Empfindlichkeit und Meßgenauigkeit der Sensoranordnung merklich beeinträchtigt werden. Dies führt daher zu einem nicht optimalen Betriebsverhalten bei der Verarbeitung eines Ausgangssignals einer kapazitiven Sensoranordnung.

Ausgehend von diesem Stand der Technik besteht die Aufgabe der vorliegenden Erfindung darin, ein verbessertes Konzept zur Verarbeitung eines Ausgangssignals eines Sensors zu schaffen, um die Meßgenauigkeit und Empfindlichkeit einer Sensoranordnung zu verbessern.

Diese Aufgabe wird durch ein Verfahren zur Verarbeitung eines analogen Ausgangssignals eines Sensors gemäß Anspruch 1 und durch eine Vorrichtung zur Verarbeitung eines analogen Ausgangssignals eines Sensors gemäß Anspruch 14 gelöst.

Der vorliegenden Erfindung liegt die Erkenntnis zugrunde, daß die Verarbeitung eines Sensorausgangssignals eines Sensorelements, wie z.B. eines kapazitiven Drehratensensors, durch die Verwendung einer digitalen Verarbeitungstechnik deutlich verbessert werden kann.

Gemäß der vorliegenden Erfindung wird das Ausgangssignal eines Sensorelements mit Hilfe eines Analog/Digital-Wandlers (A/D-Wandler) mit Abtast-Halte-Glied (Sample&Hold-Glied) in einen digitalen Signalprozessor (DSP) eingelesen, in dem dann das Nutzsignal digital weiterverarbeitet und ausgewertet werden kann.

Um das amplitudenmodulierte, mit einem hochfrequenten Trägersignal versehene Sensorausgangssignal für einen digitalen Signalprozessor geeignet aufzubereiten, so daß der digitale Signalprozessor die zu erfassende Meßgröße mit einem relativ geringen Rechenaufwand bestimmen und ausgeben kann, wird bei der vorliegenden Erfindung bei der Verarbeitung des Sensorausgangssignals das Prinzip der sogenannten Unterabtastung (Undersampling) verwendet.

Das oben dargestellte Prinzip der Unterabtastung kann erfindungsgemäß für alle Sensoren, deren Ausgangssignal ein typischerweise hochfrequentes Trägersignal aufweist, das durch eine Meßgröße moduliert, z.B. amplitudenmoduliert, ist, d.h. insbesondere für kapazitive Sensoren, verwendet werden. Bei diesem Prinzip werden zuerst hochfrequente Trägersignale in der Sensoranordnung auf das Meßsignal aufmoduliert und anschließend nicht mit dem hochfrequenten Signal demoduliert, wie es aus dem Stand der Technik bekannt ist, sondern das Meßsignal wird mit Hilfe eines A/D-Wandlers mit Abtast-Halte-Glied mittels einer niedrigeren Abtastfrequenz in ein für den digitalen Signalprozessor einfach zu verarbeitendes Nutzsignal umgewandelt. Bei "geeigneter" Wahl der Abtastfrequenz für den Unterabtastungsvorgang kann das abgetastete Sensorausgangssignal, dessen Amplitude proportional zur Meßgröße ist, direkt von dem digitalen Signalprozessor digital weiterverarbeitet werden, um die Meßgröße zu bestimmen.

Im Fall eines kapazitiven Drehratensensors bedeutet dies, daß die Amplitude des Nutzsignals proportional zur Kapazität des kapazitiven Sensorelements bzw. zur Kapazitätsänderung, wenn ein differentielles Ausleseverfahren vorliegt, ist.

Wie bereits erörtert, soll mit der vorliegenden Erfindung das analoge Ausgangssignal eines Sensors vorteilhaft verarbeitet werden, wobei das analoge Sensorausgangssignal ein hochfrequentes Trägersignal aufweist, das durch eine Meßgröße moduliert (z.B. amplitudenmoduliert) ist. Von entscheidender Bedeutung bei dem erfindungsgemäß verwendeten Prinzip der Unterabtastung ist die bereits angesprochene "geeignete" Wahl der Abtastfrequenz des Abtastsignals.

Bei der vorliegenden Erfindung wird das analoge Sensorausgangssignal mit einem A/D-Wandler mit Sample&Hold-Glied abgetastet, wobei die Abtastfrequenz so eingestellt ist, daß die Trägerfrequenz auf dem Sensorausgangssignal ein ganzzahliges Vielfaches der Abtastfrequenz ist.

Da die Trägerfrequenz $\omega_c$ bei kapazitiven Sensoren üblicherweise um einen Faktor 30 - 500 höher als die Frequenz $\omega_{drive}$ des Nutzsignals ist, kann das Sensorausgangssignal auch mit einer niedrigeren Frequenz als der Trägerfrequenz abgetastet werden, um das Nutzsignal vollständig, d.h. ohne Informationsverlust, rekonstruieren zu können. Dabei muß jedoch die Phase des Abtastsignals so gewählt werden, daß diese synchron zu dem Trägersignal in dem Sensorausgangssignal ist. Dies wird beispielsweise durch eine synchrone Frequenzteilung des Trägersignals erreicht. Um nun das Nutzsignal aus dem abgetasteten Sensorausgangssignal zu erhalten, muß das abgetastete Sensorausgangssignal gefiltert, d.h. bandpassgefiltert, werden, um periodisch wiederholte, höher-frequente Signalanteile des abgetasteten Signals aus demselben im wesentlichen zu entfernen, wobei die Amplitude des bandpassgefilterten Signals, d.h. des Nutzsignals, proportional zu der von dem Sensor erfaßten Meßgröße ist. Die Bandpassfilterung und die weitere Verarbeitung und Aufbereitung des abgetasteten Sensor wird dabei digital in einem dem A/D-Wandler nachgeschalteten digitalen Signalprozessor (DSP) durchgeführt.

Aus dem erhaltenen Nutzsignal kann nun von dem digitalen Signalprozessor ohne großen Rechenaufwand die zu erfassende Meßgröße, wie z.B. die Drehrate, bestimmt werden. Da aufgrund der Unterabtastung keine umfangreichen Rechenoperationen erforderlich sind, kann damit die gesamte (digitale) Signalverarbeitung und Auswertung, d.h. das Abtasten und Filtern des Sensorausgangssignals und das Bestimmen der Meßgröße, von einem digitalen Signalprozessor ausgeführt werden.

Durch die Möglichkeit, die Verarbeitung eines Sensorausgangssignals eines Sensorelements mit einem Signalprozessor im wesentlichen digital durchführen zu können, ergibt sich eine Vielzahl von Vorteilen.

Die Möglichkeit, den Wandlungsvorgang zu einem speziell definierten Zeitpunkt zu starten, ist für die Auswertung des Sensorsignals besonders wichtig, um die exakte Einhaltung der Unterabtastung des Sensorausgangssignals zu gewährleisten. Die entsprechende Bandbreite dieses A/D-Wandlers mit Sample&Hold-Glied muß deshalb entsprechend der höchsten Signalfrequenz gewählt werden. Ein weiterer Vorteil dieses Prinzips ist, daß die Umwandlung vom analogen zum digitalen Teil, direkt nach der ersten Verstärkung des Sensorsignals geschieht, wobei in diesem Fall das Nutzsignal nur durch das Eigenrauschen des ersten (analogen) Verstärkers begrenzt wird.

Bei einem kapazitiven Sensor, wie z.B. einem kapazitiven Beschleunigungssensor, kann also mit Hilfe dieses Unterabtastungsverfahrens das Nutzsignal direkt ausgewertet werden, weil der A/D-Wandler das Spektrum auf den gesamten Frequenzbereich abbildet.

Bei geeigneter Wahl der Abtastfrequenz als direkter Teiler von der Trägerauswertefrequenz kann das Spektrum so verschoben werden, daß die Träger in den Nullpunkt (f=0 Hz) verschoben werden und die Informationen in der Amplitude dieses Signals, d.h. die Beschleunigung (Kapazität), direkt proportional zur Amplitude des Meßsignals sind.

Bei einem differentiellen kapazitiven Ausleseverfahren, wie es beispielsweise bei dem Drehratensensor DAVED® angewendet wird, kann daher auf die erste Demodulationsstufe verzichtet werden, da dies bereits durch die speziellen A/D-Wandler geschieht. In diesem Fall erhält man eine Wechselspannung, deren Amplitude der gemessenen Drehrate entspricht. Wird dieses Signal nochmals demoduliert (2. Demodulation) wird diese Demodulation digital berechnet und die entsprechenden Algorithmen direkt in einem digitalen Signalprozessor (DSP) durchgeführt.

Die eigentliche Information (Bit-Kombination proportional zur Drehrate) wird aus dem digitalen Signalprozessor digital ausgegeben oder kann als PWM-Signal (PWM = Pulsweitenmodulation) weiterverarbeitet werden, um bei einer etwaigen D/A-Wandlung des Nutzsignals keine Datenverluste bzw. kein zusätzliches Rauschen in Kauf nehmen zu müssen. Mit dieser Methode kann das Rauschen der elektronischen Schaltung reduziert werden und man kann sehr nahe an das eigentliche Auflösungsvermögen des Sensors herankommen.

Für den Aufbau eines kompletten Sensorsystems mit verschiedenen kapazitiven Sensoren (Gyroskop, Beschleunigungssensor, Neigungssensor, usw.) ist dieses Ausleseverfahren ideal geeignet. Im digitalen Signalprozessor (DSP) können die einzelnen Sensorsignale miteinander verglichen bzw. errechnet werden, wobei mit optimierten Regelalgorithmen die Leistungsfähigkeit des gesamten Systems verbessert werden kann.

Setzt man beispielsweise mehrere Drehratensensoren in verschiedenen Winkelstellungen zusammen ein, lassen sich die Bewegung und Geschwindigkeit eines Objekts ermitteln. Durch mikromechanische Fertigungsverfahren lassen sich daher kostengünstige, störungsfreie (d.h. äußerst zuverlässige) und kleinste Drehratensensoren für maßgeschneiderte spezifische industrielle Anwendungen realisieren. Mit dem erfindungsgemäßen digitalen Auslese- und Auswerteverfahren lassen sich beispielsweise für kapazitive Drehratensensoren Drehbewegungen bis zu einem Bereich von etwa 0,01° pro Sekunde erfassen.

Aufgrund der reduzierten Signalverarbeitungsanforderungen an die digitalen Signalprozessoren, die bei der vorliegenden Erfindung für die Sensorsignalauswertung eingesetzt werden, ist es möglich, daß diese durch ihre Schnelligkeit und Flexibilität für jeden einzelnen Sensor oder für das gesamte System zusätzliche Aufgaben und Funktionen übernehmen können, wie z.B. eine aktive Temperaturkompensation mit Hilfe von PI-Reglern, eine Selbstkalibrierung sowie Selbstdiagnosefunktionen.

Bevorzugte Ausführungsbeispiele der vorliegenden Erfindung werden nachfolgend bezugnehmend auf die beiliegenden Zeichnungen detaillierter erläutert. Es zeigen:

Fig. 1        ein Blockschaltbild einer digitalen Signalauswer- tungselektronik für ein Sensorelement gemäß der vor- liegenden Erfindung;

Fig. 2A-L     Darstellungen zur Erläuterung des Vorgangs der Unter- abtastung bei der digitalen Auswertung eines Aus- gangssignals eines kapazitiven Sensors;

Fig. 3        ein Blockschaltbild einer digitalen Signalauswer- tungselektronik für ein kapazitives Sensorelement mit Primär- und Sekundärregelkreis;

Fig. 4        eine Prinzipdarstellung der erfindungsgemäßen digita- len Signalauswertungsanordnung;

Fig. 5        eine Prinzipdarstellung einer herkömmlichen analogen Signalauswertungsanordnung; und

Fig. 6        ein Blockschaltbild einer herkömmlichen analogen Signalauswertungselektronik für eine Sensoranordnung.

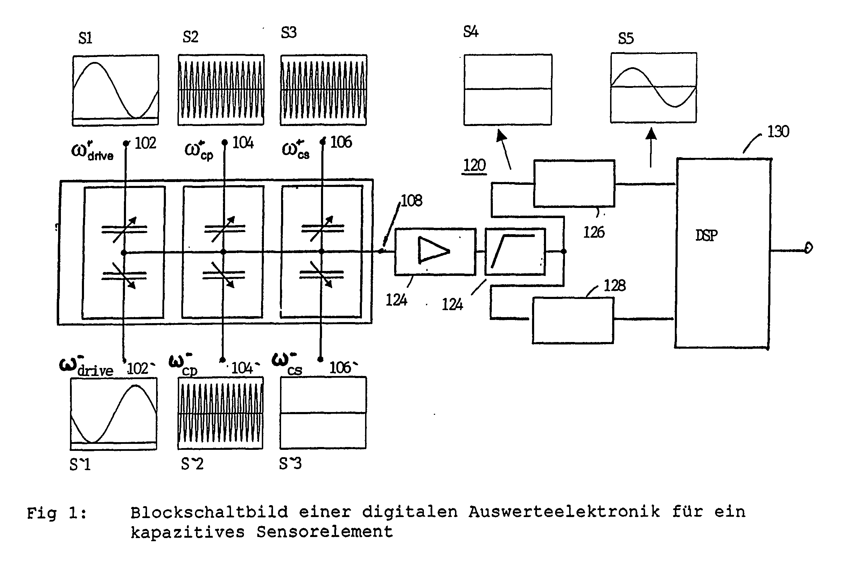

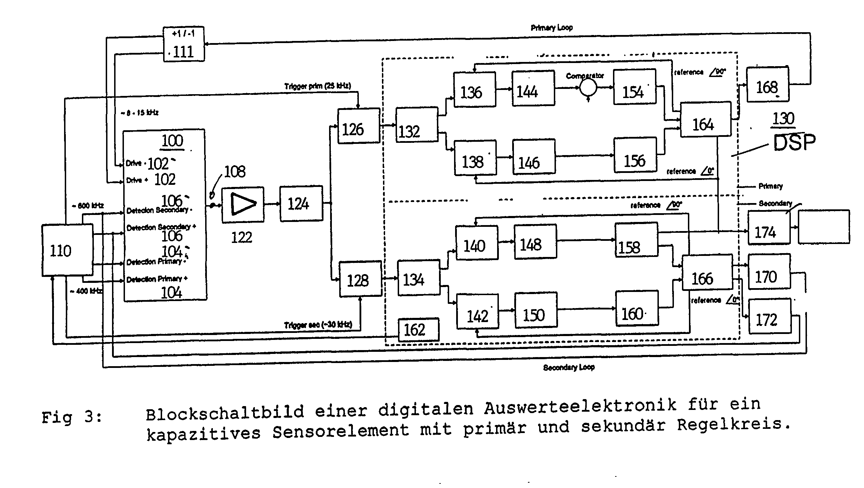

Fig. 1 zeigt das Blockschaltbild einer digitalen Auslese- und Auswerteelektronik 120 für eine Sensoranordnung 100 gemäß der vorliegenden Erfindung. Das kapazitive Sensorelement 100 entspricht dem bereits in der Beschreibungseinleitung erörterten Sensorelement 300 von Fig. 3. Bei der folgenden Beschreibung der vorliegenden Erfindung wird zur Erläuterung des erfindungsgemäßen Konzepts auf kapazitive Sensorelemente bezug genommen, wie z.B. auf mikromechanische Drehratensensoren, die die Coriolis-Kraft zur Bestimmung einer zu erfassenden Drehrate ausnutzen.

Das schematisch in Fig. 1 dargestellte kapazitive Sensorelement 100 weist drei Eingangselektrodenpaare auf, wobei an dem Treibereingangselektrodenpaar 102, 102' Treibereingangssignale S1, S'1 mit der Frequenz $\omega^+_{drive}$, $\omega^-_{drive}$ angelegt sind, an dem Elektrodenpaar 104, 104' primäre Trägersignale S2, S'2 mit der Frequenz $\omega^+_{cp}$, $\omega^-_{cp}$ angelegt sind, und an dem Elektrodenpaar 106, 106' sekundäre Trägersignale S3, S'3 mit der Frequenz $\omega^+_{cs}$, $\omega^-_{cs}$ angelegt sind. Die Indizes (+/-) geben dabei eine Phasenverschiebung der jeweiligen Signale von 180° an, so daß das Signal S1 um 180° zu S'1, das Signal S2 um 180° zu S'2 und das Signal S3 um 180° zu S'3 phasenverschoben ist. Aufgrund interner Modulationsvorgänge in dem Sensorelement ist das eigentliche Sensorausgangssignal an dem Ausgang 108 des Sensorelements ein analoges Signal, das ein hochfrequentes Trägersignal aufweist, das durch eine Meßgröße moduliert ist. Das Sensorausgangssignal beinhaltet damit die Informationen über die erfaßte Meßgröße, z.B. über die vorhandene Drehrate.

Da bei kapazitiven Drehratensensoren sehr kleine Kapazitäten bzw. Kapazitätsänderungen bis in einen Bereich von etwa $10^{-18}$ F erfaßt werden müssen, erhält man als Sensorausgangssignale nur sehr kleine Spannungen, die nicht direkt ausgewertet werden können. Durch die Verwendung von hochfrequenten Trägersignalen, die mit der erfaßten Meßgröße moduliert sind, kann das Signal/Rausch-Verhältnis des Sensorausgangssignals deutlich verbessert werden.

Wie bei der zum Stand der Technik beschriebenen Sensoranordnung wird das amplitudenmodulierte, mit einem hochfrequenten Trägersignal versehene Ausgangssignal des Sensors zuerst einem (analogen) Operationsverstärker zugeführt und dort verstärkt.

Der Ausgang 108 des Sensorelements 100 ist mit dem Eingang der digitalen Auslese- und Auswerteelektronik 120 verschaltet. Am Eingang der digitalen Auswerteelektronik 120 befindet sich ein Operationsverstärker 122, an dessen Eingang das Ausgangssignal des kapazitiven Sensorelements 100 anliegt. Der Ausgang des Operationsverstärkers 122 ist mit einem analogen Hochpaßfilter 124 verbunden. Der Ausgang des Hochpaßfilters 124 ist mit zwei Analog/ Digital-Wandlern 126, 128 mit Abtast-Halte-Glied verbunden. Die Ausgänge der Analog/Digital-Wandler 126, 128 sind mit einem digitalen Signalprozessor 130 verbunden.

Das verstärkte Sensorausgangssignal wird dem Hochpaßfilter 124 zugeführt, um Gleichanteile, wie z.B. ein DC-Offset des Operationsverstärkers, und niederfrequente Anteile des Sensorausgangssignals auszufiltern. Der Signalverlauf des verstärkten, bandpassgefilterten Sensorausgangssignal ist als Verlauf S4 in Fig. 1 dargestellt. Man erkennt, daß das verstärkte Sensorsignal S4 ein amplitudenmoduliertes, mit einem hochfrequenten Träger versehenes Signal ist.

Der digitale Signalprozessor 130 stellt an seinem Ausgang ein Ausgangssignal bereit, das die durch das kapazitive Sensorelement erfaßte Meßgröße wiedergibt.

Im folgenden wird nun die Funktionsweise der Vorrichtung und des Verfahrens zur Verarbeitung eines analogen Ausgangssignals (S4) eines Sensors (100) gemäß der vorliegenden Erfindung erläutert.

Bei der erfindungsgemäßen Sensorauswerteanordnung wird das analoge Sensorausgangssignal, das ein Trä- gersignal mit einer Trägerfrequenz $\omega_c$ aufweist, das durch eine Meßgröße moduliert ist, mit einem A/D-Wandler 126, 128 mit Abtast-Halte-Glied mit einer Abtastfrequenz $\omega_A$ abgetastet, um ein abgetastetes, in digitaler Form vorliegendes Sensorausgangssignal zu erhalten. Die Frequenz $\omega_A$ des Abtastsignals ist dabei so eingestellt, daß diese ein ganzzahliger Teiler n der Trägerfrequenz $\omega_c$ ist, wobei gilt: $\omega_c = n\omega_A$.

Wie bereits erläutert, kann durch die Verwendung von hochfrequenten Trägersignalen das Signal/Rausch-Verhältnis des Sensorausgangssignals deutlich verbessert werden, wobei bei kapazitiven Sensoren die Trägerfrequenz $\omega_c$ des Trägersignals üblicherweise auf eine Frequenz von größer als 250 kHz eingestellt ist und vorzugsweise etwa 500 - 750 kHz beträgt.

Da die Trägerfrequenz $\omega_c$ bei kapazitiven Sensoren üblicherweise um einen Faktor 30 - 500 höher als die Frequenz $\omega_{drive}$ des Nutzsignals ist, kann das Sensorausgangssignal auch mit einer niedrigeren Frequenz als der Trägerfrequenz abgetastet werden, um das Nutzsignal vollständig, d.h. ohne Informationsverlust, rekonstruieren zu können. Dabei muß jedoch die Phase des Abtastsignals so eingestellt sein, daß das Abtastsignal synchron zu dem Trägersignal ist. Dies wird im allgemeinen durch eine synchrone Frequenzteilung des Trägersignals erreicht, wobei die Trägerfrequenz $\omega_c$ des Trägersignals ein ganzzahliges Vielfaches der Abtastfrequenz $\omega_A$ ist, d.h. $\omega_c = n\omega_A$. Das Sensorausgangssignal liegt also nach der Abtastung durch den A/D-Wandler mit Abtast-Halte-Glied in digitaler Form als Folge diskret abgetasteter Werte vor.

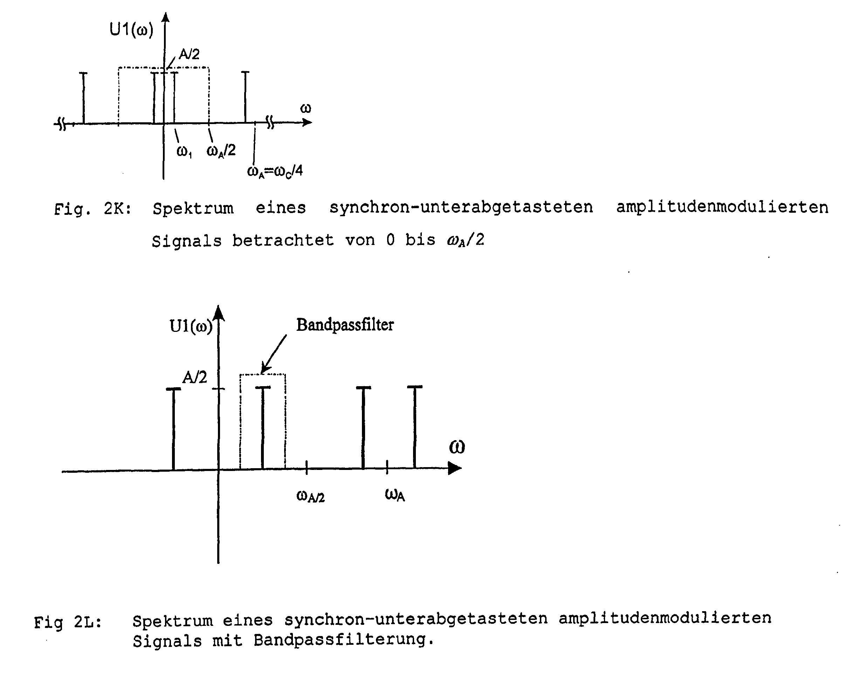

Dieses abgetastete, in digitaler Form vorliegende Sensorausgangssignal wird in dem digitalen Signalprozessor 130 digital weiterverarbeitet, d.h. unter anderem digital bandpaßgefiltert, wobei die periodisch wiederholten, höher frequenten Signalanteile, deren Frequenz größer als $\omega_a/2$ ist, entfernt werden sollen. Hierbei ist die Grenzfrequenz des Bandpassfilters vorzugsweise auf die halbe Abtastfrequenz $\omega_a/2$ eingestellt, um das gesuchte Nutzsignal zu erhalten. In diesem Zusammenhang wird zum besseren Verständnis auf Fig. 2L verwiesen, die das Spektrum eines synchronunterabgetasteten amplitudenmodulierten Signals mit Bandpassfilterung zeigt.

Da die Amplitude des nun vorliegenden Nutzsignals proportional zu der von dem Sensor (100) erfaßten Meßgröße, z.B. der Drehrate, ist, kann das Nutzsignal von einem Signalprozessor (130) digital ausgewertet werden, um die Meßgröße zu bestimmen. Der digitale Signalprozessor (130) wird schließlich ein analoges oder digitales Signal ausgeben, das die Meßgröße wiedergibt.

Zusammenfassend kann also festgestellt werden, daß das Sensorausgangssignal mit Hilfe von A/D-Wandler 126, 128 mit Abtast-Halte-Glied unter Verwendung einer sogenannten Unterabtastung in ein Nutzsignal umgewandelt wird. Als Ergebnis liegt ein sinusförmiges Signal S5 vor, dessen Amplitude direkt proportional zu der zu messenden Meßgröße, z.B. zur Drehrate, ist. Dieses Nutzsignal wird in einen digitalen Signalprozessor (DSP) 130 eingelesen, der das Nutzsignal S5 dann ohne großen Rechenaufwand weiterverarbeiten kann, um die Meßgröße zu bestimmen und beispielsweise als analoges oder digitales Signal auszugeben.

Dabei ist zu beachten, daß das erfindungsgemäße Konzept zur Verarbeitung eines analogen Ausgangssignals eines Sensors für alle analogen Sensorausgangssignale, insbesondere von kapazitiven Sensoren, verwendet werden kann, die ein Trägersignal aufweisen, das durch eine Meßgröße moduliert ist.

Im folgenden werden nun die einer Realisierung der Unterabtastung zugrundeliegenden systemtheoretischen Aspekte der vorliegenden Erfindung näher erläutert.

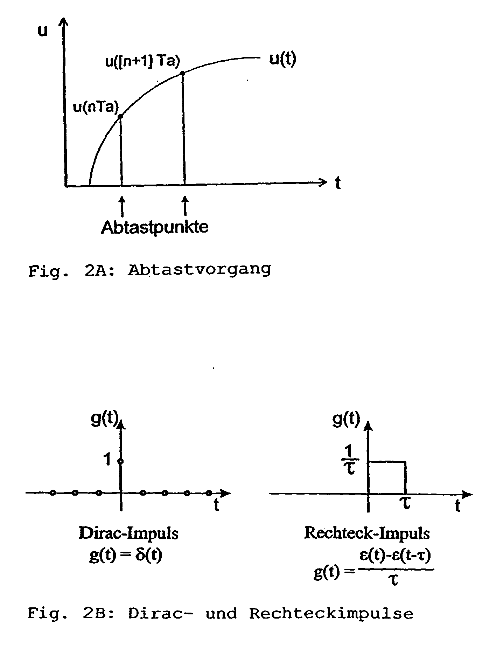

Ideales Abtasten heißt, ein kontinuierliches Signal u(t) durch eine Folge von äquidistanten Impulsen zu den Zeiten $t = nT_A$ mit n = ... -1, 0, 1,.... darzustellen. Dabei müssen die Impulsflächen den jeweiligen Werten zur Zeit($nT_A$) proportional sein (siehe Fig. 2A: Abtastvorgang).

Die Abtastperiode $T_A = 1/f_A$ ist der Abstand zwischen den Abtastzeitpunkten. Zur Darstellung der abgetasteten Funktionswerte werden auf 1 normierte Impulse g(t) verwendet, wie es in Fig. 2B dargestellt ist (siehe Fig. 2B: Dirac- und Rechteckimpulse).

Die Beschreibung des Abtasters erfolgt anhand eines theoretischen Modells. Die Impulsform des Abtasters beschreibt ein Dirac-Impuls, die Funktion $\varepsilon(t)$ eine Sprungfunktion. Der Abtaster kann somit als einfaches Modell eines Multiplizierers mit den Eingangswerten $u_{e1}$ und $u_{e2}$ beschrieben werden. Das Ergebnis, d.h. der Ausgangswert $u_a$, wird noch mit der Multiplikatorkonstanten $U_M$ verknüpft:

$$u_a = \frac{u_{e1} \cdot u_{e2}}{U_M} \qquad\qquad (1)$$

Mit $u_{e1}$ = u(t) und der periodische Folge von Dirac-Impulsen

$$u_{e2} = u_\delta \cdot T_\delta \cdot \sum_{n=-\infty}^{+\infty} \delta(t - n \cdot T_A) \qquad\qquad (2)$$

mit der Spannungszeitfläche $u_\delta T_\delta$, erhält man nach dem Einsetzen, der Umformung und dem Berücksichtigung der Beziehung, daß δ(t-nT_A) für t ≠ nT_A Null ist:

$$u_a = \frac{u_\delta \cdot T_\delta}{U_M} \cdot \sum_{n=-\infty}^{+\infty} u(nT_A) \cdot \delta(t - n \cdot T_A) \qquad (3)$$

Dirac-Impulse können real nicht erzeugt werden, deshalb schließt sich im theoretischen Modell des Abtasters an den Multiplikator ein Formfilter an, das den Dirac-Impuls beispielsweise in einen Rechteckimpuls umwandelt.

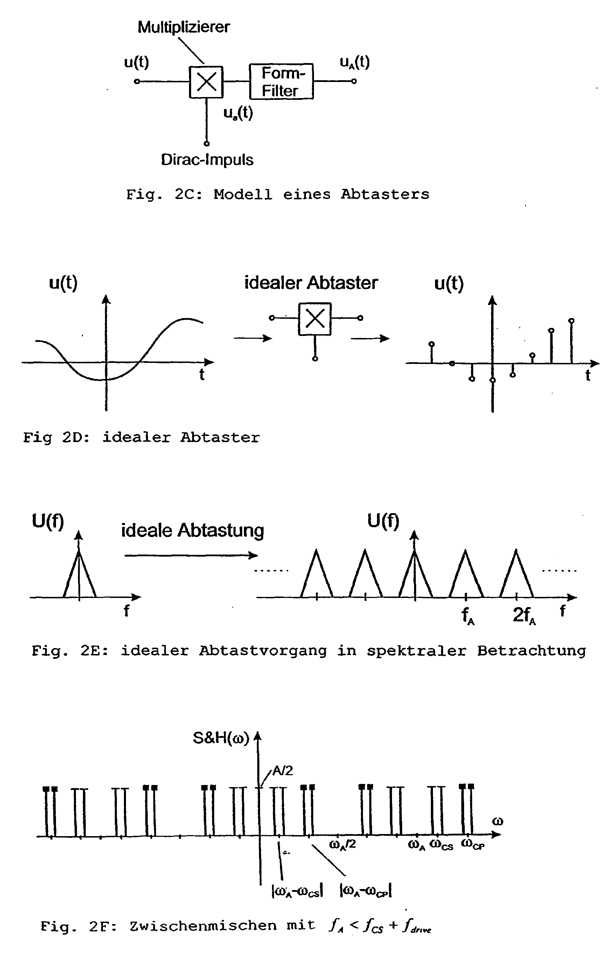

Man erhält somit das in Fig. 2C dargestellte Modell eines Abtasters.

Die prinzipielle Idee der vorliegenden Erfindung besteht nun darin, diesen Multiplizierer als Mischer und als erste Demodulationsstufe zu verwenden.

Um das Prinzip genauer erläutern zu können, sind jedoch weitere Betrachtungen, insbesondere im spektralen Bereich, erforderlich.

Der Formfilter ersetzt den Term δ*(t-n·T_A)*. Als Formel für den realen Abtaster erhält man:

$$u_a = \frac{u_\delta \cdot T_\delta}{U_M} \cdot \sum_{n=-\infty}^{+\infty} u(nT_A) \cdot \frac{\varepsilon(t - n \cdot T_A) - \varepsilon(t - \tau - n \cdot T_A)}{\tau} \qquad (4)$$

Die Höhe u_A(nT_A) eines Impulses an der Stelle t = nT_A beträgt also:

$$u_a(nT_A) = \frac{u_\delta \cdot T_\delta}{U_M \cdot \tau} \cdot u(nT_A) = K_A \cdot u(nT_A) \qquad (5)$$

Bildlich dargestellt wird die Funktion f(t) über einen idealen Abtaster also zu einer Reihe von gewichteten Dirac-Impulsen umgewandelt (siehe dazu Fig. 2D: idealer Abtaster).

Zur Berechnung im Frequenzbereich muß das Spektrum des Abtastsignals berechnet werden. Dies geschieht durch Multiplikation des Spektrums des idealen Abtasters mit dem Frequenzgang des Formfilters. Der Frequenzgang ist die Fourier-Transformierte der Impulsantwortfunktion *g(t)*. Durch Fourier-Transformation der Funktion

$$g(t) = \frac{\varepsilon(t) - \varepsilon(t - \tau \cdot)}{\tau} \qquad (6)$$

erhält man den komplexen Frequenzgang

$$F_F(f) = \frac{\sin(\pi \cdot f \cdot \tau)}{\pi \cdot f \cdot \tau} \cdot e^{-j\pi \cdot f \cdot \tau} \qquad (7)$$

des Formfilters.

Das Spektrum des idealen Abtasters erhält man, indem man die Dirac-Impulsfolge δ_{per}(t) in einer Fourier-Reihe entwickelt

7

$$\delta_{per}(t) = \sum_{n=-\infty}^{+\infty} \delta(t - n \cdot T_A) = \frac{1}{T_A} \sum_{n=-\infty}^{+\infty} e^{j2\cdot\pi\cdot n\cdot f_A\cdot t} \qquad (8)$$

und in die Gleichung (5) für $u_a(t)$ einsetzt. Man erhält dann die Beziehung:

$$u_a(t) = \frac{u_\delta \cdot T_\delta}{U_M T_A} \cdot \sum_{n=-\infty}^{+\infty} u(t) \cdot e^{j2\cdot\pi\cdot n\cdot f_A\cdot t} \qquad (9)$$

Mit Hilfe der Fourier-Transformation

$$U(f) = \int_{-\infty}^{\infty} u(t) \cdot e^{-j2\cdot\pi\cdot n\cdot f\cdot t} \, dt \qquad (10)$$

werden Differentialgleichungen in algebraische Gleichungen umgewandelt.
Nach weiteren Umformungen und Vereinfachungen wird daraus:

$$u_a(f) = \frac{u_\delta T_\delta}{U_M T_A} \sum_{n=-\infty}^{+\infty} U(f - nf_A) \qquad (11)$$

Dieses Ergebnis läßt sich bildlich darstellen. Die Abtastung mit einem idealen Sample&Hold-Glied bewirkt eine periodische Wiederholung des Spektrums des abzutastenden Signals mit der Vielfachen der Abtastfrequenz $f_A$. Die Fig. 2E zeigt das Spektrum eines Signals vor und nach der Wandelung mit einem idealen Abtaster (Fig. 2E: idealer Abtastvorgang in spektraler Betrachtung).
Die Verwendung des Abtasters als Demodulationsstufe wird mit diesen Vorkenntnissen im Frequenzbereich und anhand einer anschaulichen Betrachtung der Signale noch genauer im Zeitbereich erklärt.
Um Signale digitalisieren und danach einwandfrei wiedergeben zu können, müssen noch weitere Bedingungen erfüllt sein. Man spricht in diesem Zusammenhang von dem Abtasttheorem. Es besagt, daß das analoge Signal bandbegrenzt sein muß, d.h. oberhalb der Signalgrenzfrequenz $f_{gs}$ dürfen sich keine spektralen Komponenten mehr befinden, damit das ursprüngliche Signal wieder vollständig, ohne Informationsverlust rekonstruiert werden kann. Für das Spektrum $U(f)$ eines Signals muß also die Bedingung $U(f)=0$ für $|f| \geq f_{gs}$ angenommen werden.
Die Abtastfrequenz $f_A$ muß daher mindestens doppelt so hoch wie die Signalgrenzfrequenz sein:

$$f_A \geq 2 \cdot f_{gs} \qquad (12)$$

Beide Bedingungen müssen erfüllt sein, um ein sogenanntes Aliasing, d.h. ein Überlappen bei der periodischen Wiederholung der Spektrums von $u(t)$ zu vermeiden, da dieser Aliasing-Effekt ansonsten ein einwandfreies Wiedergeben des Signals verhindern würde.
Um dem Abtasttheorem zu entsprechen, muß also die Frequenz zur Digitalisierung mindestens doppelt so groß wie die größte im Signal vorkommende Frequenz sein.
Wendet man diese Bedingungen, d.h. das Abtasttheorem, auf die erfindungsgemäßen Auswerteelektronik eines Sensors, wie z.B. eines kapazitiven Drehratensensors, an, müßte diese Frequenz $f_A \geq 2\cdot(f_{cs} + f_{drive})$ bzw. $f_A \geq 2\cdot(f_{cp} + f_{drive})$ sein. Da das Signal/RauschVerhältnis, also der Quotient aus der Amplitude des übertragenen Signals zur Rauschamplitude, möglichst groß sein soll, muß die Trägerfrequenz möglichst hoch sein, z.B. mehrere hundert kHz. Wenn die Trägerfrequenz also 500kHz oder höher ist, müßte infolge dessen die Abtastrate höher als 1MHZ sein.

Die Verarbeitung in diesem Taktzyklus hat große Datenmengen zur Folge. Das heißt, bei einer Grenzfrequenz von 100Hz des Sensors werden Drehratenänderungen maximal bis zu einer Periodenzeit von 10msec detektiert. Die Information um die Antriebsfrequenz (1-10KHz) einwandfrei abzubilden, liegt bei 10000 Schwingungen pro Sekunde. Bei einer Trägerfrequenz von beispielsweise 500 KHz muß der Abtastvorgang gemäß Abtasttheorem mit einer Frequenz von 1MHz durchgeführt werden. Dies stellt einen Faktor von 10000 bezogen auf die Bandbreite von 100Hz dar. Die Abtastung müßte daher infolge der hohen Trägerfrequenz im Vergleich zur nötigen Information mit dem Faktor 100*10000 (=1*10^6) erfolgen.

Wie es in der Fig. 2C (Model eines Abtasters) gezeigt ist, besteht der Abtaster aus einem Multiplizierer und einem Formfilter. Es liegt also nahe, diese Eigenschaft zu verwenden, um ein sogenanntes Zwischenmischen bzw. eine Synchron- oder Unterabtastung mit bestimmten Eigenschaften und Grenzwerten anzustreben.

Bei einer Zwischenmischung wird die Eigenschaft verwendet, daß das Signal in den Bereichen 0 bis $f_A$ bzw. $n \cdot f_A$ bis $(n+1) \cdot f_A$ bei einem idealen Abtaster identisch ist, und daß keine bandbegrenzten Signale mit DC-Anteil ausgewertet werden sollen. Es ist also möglich, das Signalband mit den benötigten Informationen in einen Bereich zu "schieben", in dem die Datenmengen wieder verarbeitbar sind. In Fig. 2F ist ein sog. Zwischenmischen mit $f_A < f_{CS} + f_{drive}$ dargestellt.

Bei geeigneter Wahl der Abtastfrequenz ist es möglich, die Nutzfrequenz direkt in den Nullpunkt zu schieben, und somit die erste Demodulation mit dem Abtastglied bzw. mit dem integrierten Analog/Digital-Wandler zu realisieren.

Dabei wird eine Schwingung mit der Frequenz $\omega_0$ mit derselben Periodendauer $T_A = 1/\omega_0$ abgetastet. Als Ausgangspunkt dient hier wieder der ideale Abtaster, wobei der Einbezug des realen Abtasters mit dem charakteristischen zusätzlichen Frequenzgang sin(x)/x keinen Einfluß auf diese Betrachtung hat.

Die Formel für die abgetastete Schwingung lautet mit der Gleichung (11) und unter Berücksichtigung von

$$k_\delta = \frac{u_\delta \cdot T_\delta}{U_M T_A} = 1 \qquad (13)$$

und

$$e^{jx} = \cos(x) + j\sin(x) \qquad (14)$$

sowie nach Vereinfachung:

$$u_a(t) = \hat{u} \cdot \sum_{n=-\infty}^{+\infty} \cos(\omega_0 t) \cdot \cos(n\omega_0 t) \ . \qquad (15)$$

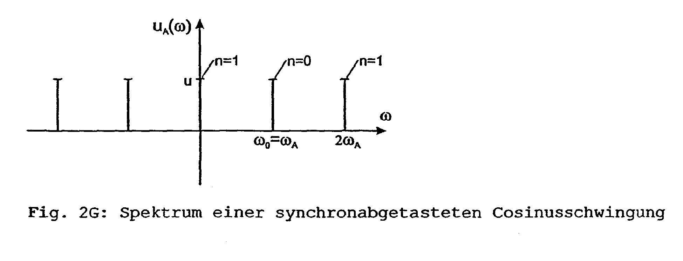

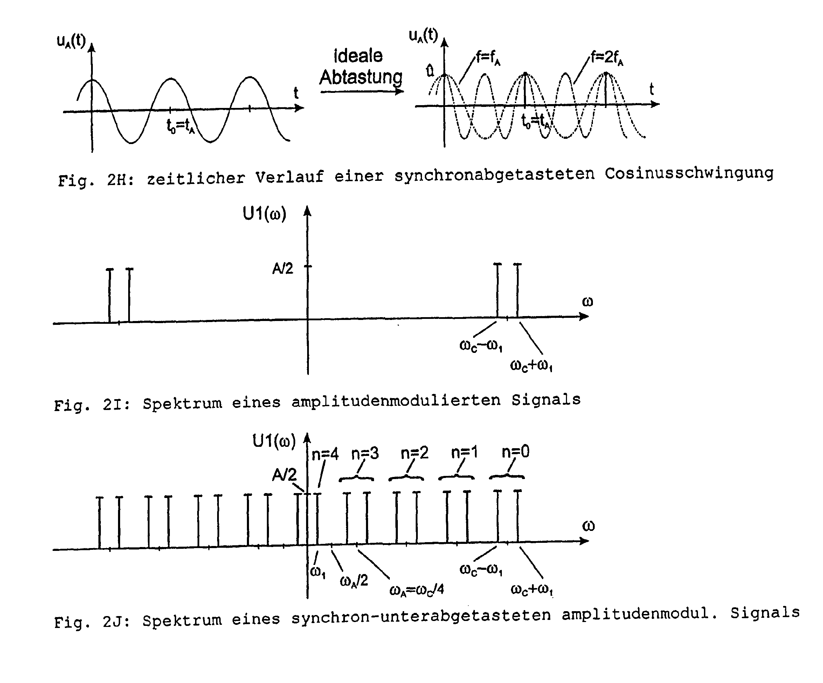

Man erhält also äquidistante Abtastwerte mit im Spektrum sichtbaren Frequenzanteilen, die mit der Laufvariablen n gekennzeichnet sind. Fig. 2G zeigt ein Spektrum einer synchronabgetasteten Cosinusschwingung. Die synchrone Abtastung kann im Zeitbereich mit folgenden Signalbildern anschaulich gezeigt werden, wobei Fig. 2H den zeitlichen Verlauf einer synchronabgetasteten Cosinusschwingung zeigt.

Durch diesen Vorgang erscheint die Summe der "möglichen Signale" unendlich, d.h. die Abtastwerte werden von beliebigen Vielfachen, beginnend bei "Null" der Abtastfrequenz erfüllt.

Betrachtet man das Signal in der digitalen Signalverarbeitung nur vom Gleichspannungsanteil bis zur halben Abtastfrequenz, so entspricht dies einer Frequenzverschiebung in den Nullpunkt der Frequenzachse und somit einer Demodulation. Die Trennung der höherfrequenten Anteile geschieht theoretisch mit einem idealen Tiefpaß, dessen Grenzfrequenz der halben Abtastfrequenz entspricht.

$$u_a(t) = \begin{cases} \hat{u} & \text{für} \quad \omega \leq \dfrac{\omega_A}{2} \\ 0 & \text{sonst} \end{cases} \qquad (16)$$

In einem Schaltungsaufbau wird dies mit einem möglichst steilen Tiefpaß, z.B. mittels Software, realisiert, der die unerwünschte Oberwellen so stark wie möglich dämpft.

Wie im vorherigen Abschnitt gezeigt, kann der Abtaster zur Bestimmung der Amplitude und Phase einer Schwingung, d.h. als erste Demodulationsstufe verwendet werden, wenn der Abtastvorgang synchron zum Träger entnimmt.

Da der Faktor für den Frequenzabstand von der zu detektierenden Welle zu der informationsbehafteten Schwingung im Bereich 30 bis 500 (d.h. das Verhältnis der Frequenz des Trägersignals zu der Frequenz des Nutzsignals) ist, muß nicht jeder synchrone Wert verwendet werden, so daß eine weitergehende Unterabtastung des Signals möglich ist.

Der Unterabtastungsfaktor $v_{uds}$ beschreibt die Verhältnisse der Schwingungsfrequenz $\omega_{cs}$ zu der Abtastfrequenz $\omega_A$.

$$v_{uds} = \frac{\omega_{CS}}{\omega_A} \qquad (17)$$

Am folgenden Beispiel soll dieser Vorgang näher beschrieben werden, wobei der Faktor $v_{uds}$ hier beispielsweise gleich vier gewählt ist. Als Eingang dient ein amplitudenmoduliertes Signal

$$U1(t) = \left[A \cdot \cos(\omega_1 t)\right] \cdot \cos(\omega_C t) , \qquad (18)$$

welches sich spektral darstellt, wie es in Fig. 2I gezeigt ist. Fig. 2I zeigt also ein Spektrum eines amplitudenmodulierten Signals.

Das Spektrum besteht aus zwei überlagerten Schwingungen mit den Frequenzen $\omega_c \pm \omega_1$. Dies wird mit einem idealen Abtaster gewandelt und sowohl mathematisch als auch als Spektrum (siehe Fig. 2J) dargestellt.

Dabei ist die Abtastfrequenz $\omega_A$ ein Viertel der Trägerfrequenz $\omega_c$ (engl. carrier frequency), wobei der Faktor $v_{uds}$ vier ist. Mit den selben Vorbedingungen wie bei der synchronen Abtastung mit Gleichung (15), und zusätzlich mit den Gleichungen (17) und (18) erhält man das Ausgangssignals U1(t) des Wandlers:

$$U1(t) = A \cdot \sum_{n=-\infty}^{+\infty} \left[ \left(\cos(\omega_C t + \omega_1 t) + \cos(\omega_C t - \omega_1 t)\right) \cdot \cos\left(\frac{n}{v_{uds}} \cdot \omega_C t\right) \right] \qquad (19)$$

Fig. 2J zeigt ein Spektrum eines synchron-unterabgetasteten amplitudenmodulierten Signals.

Bei Betrachtung der relevanten Signale in Fig. 2K, d.h. des gekennzeichneten Bereichs zwischen 0 und der halben Abtastfrequenz $\pm\omega_A/2$, ergibt sich mit der Bedingung

$$\frac{n}{v_{uds}} = 1 \qquad (20)$$

das Ausgangssignal U1:

$$U1(t) = A \cdot \cos(\omega_1 t) . \qquad (21)$$

Fig. 2K zeigt ein Spektrum eins synchron-unterabgetasteten amplitudenmodulierten Signals von 0 bis $\pm\omega_A/2$

Das Spektrum dieses Bereiches von $-\omega_A/2$ bis $\omega_A/2$ wiederholt sich periodisch nach $n\omega_A/2$ bis $(n+1)\omega_A/2$ mit $n = [-\infty... - 1,0,1, ... + \infty]$.

Der weitere Berechnungsbereich wird mit einem idealen Tiefpaß auf $\omega_A/2$ begrenzt, bzw. die auftretenden Oberwellen des abgetasteten Sensorausgangssignals werden mit einem realen Tiefpaß möglichst gut gedämpft.

Soll das Signal nach der Abtastung direkt ausgegeben werden und liegen $\omega_A/2$ und $\omega_1$ nahe beieinander, so muß der nachfolgende Tiefpaß hoher Ordnung, d.h. sehr steil abfallend sein, um die auftretenden Oberwellen möglichst verschwinden zu lassen.

Wie aus den Überlegungen und Berechnungen hervorgeht, kann der A/D-Wandler prinzipiell als erste Demodulationsstufe verwendet werden. Der A/D-Wandler bzw. das Sample&Hold-Glied müssen spezielle Randbedingungen erfüllen, die im folgenden näher erläutert werden.

Das wichtigste Bindeglied zwischen Sensor und Elektronik bildet der A/D-Wandler mit seinen besonderen Eigenschaften. Die digitale Verarbeitung des Sensorsignals erfordert die direkte Überführung in eine Zahlenfolge durch Abtasten ohne Informationsverlust. Das sogenannte Sample&Hold-Glied soll bei dieser Anwendung näherungsweise als ideales Abtastglied arbeiten, d.h. dieses Glied darf nur sehr kurze "Proben" des Sensorsignals entnehmen. In diesem Fall müssen sozusagen nadelstichartige Abgriffe des Signals erfolgen und somit ist die Akquisitionszeit, d.h. die Zeit in der die Proben genommen werden, von wichtiger Bedeutung.

Mit der erfindungsgemäßen elektronischen Auswerteanordnung zur digitalen Auswertung der Ausgangssignale von kapazitiven Sensorelementen werden viele Vorteile gegenüber der herkömmlichen analogen Auswerteelektronik erreicht.

Zum besseren Verständnis und zur Verdeutlichung des vorteilhaften technischen Konzeptes der vorliegenden Erfindung werden nun die Prinzipien des erfindungsgemäßen Ausleseverfahrens nochmals anhand von Fig. 4 direkt dem in Fig. 5 dargestellten, bekannten Ausleseverfahren gegenübergestellt.

Wie bereits bezüglich Fig. 5 ausgeführt wurde, wird bei dem Ausleseverfahren gemäß dem Stand der Technik das verstärkte, analoge Sensorausgangssignal demoduliert, indem das Signal mit der Trägerfrequenz (z.B. 500 kHz) multipliziert wird (siehe Fig. 5).

Bei dem erfindungsgemäßen Konzept zum digitalen Auslesen eines kapazitiven Sensors, wie es in Fig. 4 prinzipiell dargestellt ist, werden die Trägersignale in der Mitte des Sensors 100 von einer Signalquelle 110 eingespeist, d.h. die Träger- und Treibersignale werden innen an einer gemeinsamen Mittelelektrode des kapazitiven Sensors 100 eingespeist, wobei das Sensorausgangssignal außen an den Außenelektroden des kapazitiven Sensors 100 abgegriffen wird. Das Sensorsignal wird differentiell ausgelesen und mit dem Operationsverstärker 122 verstärkt. Das verstärkte, analoge Sensorausgangssignal wird nun mittels eines Analog/Digital-Wandlers mit Abtast-Halte-Glied demoduliert, wobei das Abtastsignal, das von der Signalquelle 110 geliefert wird, ein ganzzahliger Teiler der Trägerfrequenz ist. Dies wird üblicherweise durch eine synchrone Frequenzteilung des Trägersignals in dem Signalgenerator erreicht, so daß das Abtastsignal synchron zu dem Trägersignal ist. Am Ausgang des Analog/Digital-Wandlers 126 liegt nun der Signalverlauf S5 (siehe Fig.1) in digitaler Form als Folge diskret abgetasteter Werte vor. Dieses digitale Signal kann nun mit relativ geringem Rechenaufwand von dem digitalen Signalprozessor 130 weiterverarbeitet werden.

Es ist mit der erfindungsgemäßen Auswerteanordnung jedoch gleichermaßen möglich, daß die Träger- und Treibersignale außen an den Außenelektroden 102-106, 102'-106' des kapazitiven Sensors 100 eingespeist werden, wobei das Sensorausgangssignal dann an der gemeinsamen Mittelelektrode 108 des Sensors 100 abgegriffen wird, wie dies beispielsweise in Fig. 1 gezeigt ist.

Durch die Gegenüberstellung des in Fig. 4 dargestellten erfindungsgemäßen Ausleseverfahrens und des in Fig. 5 dargestellten Ausleseverfahrens gemäß dem Stand der Technik wird deutlich, daß mit dem sog. Unterabtastungsprinzip ("Undersampling technique") aufgrund der im wesentlichen vollständigen digitalen Verarbeitung des Sensorausgangssignals, die ferner mit einem relativ geringen Rechenaufwand für den digitalen Signalprozessor möglich ist, eine Vielzahl von Vorteilen erreicht werden können.

Die Möglichkeit, den Wandlungsvorgang zu einem speziell definierten Zeitpunkt zu starten, ist für die Auswertung des Sensorsignals besonders wichtig, um die exakte Einhaltung der Unterabtastung des Sensorausgangssignals zu gewährleisten. Die entsprechende Bandbreite dieses A/D-Wandlers mit Sample&Hold-Glied muß deshalb entsprechend der höchsten Signalfrequenz gewählt werden. Ein weiterer Vorteil dieses Prinzips ist, daß die Umwandlung vom analogen zum digitalen Teil, direkt nach der ersten Verstärkung des Sensorsignals geschieht, wobei in diesem Fall das Nutzsignal nur durch das Eigenrauschen des ersten (analogen) Verstärkers begrenzt wird. Dabei ist zu beachten, daß das Quantisierungsrauschen des A/D-Wandlers im Rauschen des Sensors untergeht.

Bei einem kapazitiven Beschleunigungssensor kann mit Hilfe dieses Unterabtastungsverfahrens das Nutzsignal also direkt ausgewertet werden, weil der A/D-Wandler das Spektrum auf den gesamten Frequenzbereich abbildet. Bei geeigneter Wahl der Abtastfrequenz als direkter Teiler von der Trägerauswertefrequenz kann das Spektrum so verschoben werden, daß die Träger als Gleichspannung erscheinen und die Informationen in der Amplitude dieses Signals, d.h. die Beschleunigung (Kapazität), direkt proportional zur Amplitude des Meßsignals sind.

Bei einem kapazitiven Ausleseverfahren, wie es beispielsweise bei dem Drehratensensor DAVED® angewendet wird, kann somit auf die erste Demodulationsstufe verzichtet werden, da dies bereits durch die speziellen A/D-Wandler geschieht. In diesem Fall erhält man ein Wechselsignal, dessen Amplitude der gemessenen Drehrate entspricht. Wird dieses Signal nochmals demoduliert (2. Demodulation) wird diese Demodulation digital berechnet und die entsprechenden Algorithmen direkt in einem digitalen Signalprozessor (DSP) durchgeführt.

Die eigentliche Information (Bit-Kombination proportional zur Drehrate) wird aus dem digitalen Signalprozessor digital ausgegeben oder kann als PWM-Signal (PWM = Pulsweitenmodulation) weiter verarbeitet werden, um bei einer etwaigen D/A-Wandlung des Nutzsignals keine Datenverluste bzw. kein zusätzliches Rauschen in Kauf nehmen zu müssen. Mit dieser Methode kann das Rauschen der elektronischen Schaltung reduziert werden und man kann sehr nahe an das eigentliche Auflösungsvermögen des Sensors herankommen.

Für den Aufbau eines kompletten Sensorsystems mit verschiedenen kapazitiven Sensoren (Gyroskop, Beschleunigungssensor, Neigungssensor, usw.) ist dieses Ausleseverfahren ideal geeignet. Im digitalen Signalprozessor (DSP) können die einzelnen Sensorsignale miteinander verglichen bzw. errechnet werden, wobei mit optimierten Regelalgorithmen die Leistungsfähigkeit des gesamten Systems verbessert werden kann.

Setzt man beispielsweise mehrere Drehratensensoren in verschiedenen Winkelstellungen zusammen ein, lassen sich die Bewegung und Geschwindigkeit eines Objekts ermitteln. Durch mikromechanische Fertigungsverfahren lassen sich daher kostengünstige, störungsfreie (d.h. äußerst zuverlässige) und kleinste Drehratensensoren für maßgeschneiderte spezifische industrielle Anwendungen realisieren. Mit dem erfindungsgemäßen digitalen Auslese- und Auswerteverfahren lassen sich beispielsweise für kapazitive Drehratensensoren Drehbewegungen bis zu einem Bereich von etwa 0,01° pro Sekunde erfassen.

Aufgrund der verminderten Anforderungen und Auslastung der digitalen Signalprozessoren, die bei der vorliegenden Erfindung für die Sensorsignalauswertung eingesetzt werden, ist es möglich, daß diese durch ihre Schnelligkeit und Flexibilität für jeden einzelnen Sensor oder für das gesamte System zusätzliche Aufgaben und Funktionen übernehmen können, wie z.B. eine aktive Temperaturkompensation mit Hilfe von PI-Reglern, eine Selbstkalibrierung sowie Selbstdiagnosefunktionen.

Anhand von Fig. 3 wird nun der praktische Aufbau einer erfindungsgemäßen digitalen Sensorsignalausleseanordnung in Form eines Blockschaltbilds einer digitalen Auswerteelektronik für ein kapazitives Sensorelement mit Primär- und Sekundärregelkreis erläutert. Es ist zu beachten, daß die Elemente in Fig. 3, die mit den entsprechenden Elementen von Fig. 1 übereinstimmen, mit den gleichen Bezugszeichen versehen sind.

Der hier verwendete Sensor entspricht dem kapazitiven Sensor 100 von Fig. 1, wobei der Eingang 102 wird für das Treibersignal S1 ($\omega^+_{drive}$), der Eingang 102' für das um 180° phasenverschobene Treibersignal S'1 ($\omega^-_{drive}$), der Eingang 104 wird für das Trägersignal S2($\omega^+_{cp}$), der Eingang 104' für das um 180° phasenverschobene Trägersignal S'2($\omega^-_{cs}$), der Eingang 106 wird für das Trägersignal S3 ($\omega^+_{cs}$) und der Eingang 106' für das um 180° phasenverschobene Trägersignal S'3 ($\omega^-_{cs}$) vorgesehen ist. Die Eingänge 104, 104', 106, 106' für die primären und sekundären Trägersignale S2($\omega^+_{cp}$), S'2 ($\omega^-_{cs}$), S3 ($\omega^+_{cs}$), S'3 ($\omega^-_{cs}$) werden von dem Signalgenerator 110 gespeist, wobei die Eingänge 102, 102' des Sensors 100 von einem Verstärker 111 mit einem Verstärkungsfaktor von +1 bzw. -1 gespeist werden. Das Ausgangssignal des Sensors 100 wird von dem analogen Verstärker 122 verstärkt. Das verstärkte, analoge Sensorausgangssignal wird von dem analogen Hochpaßfilter 124 gefiltert.

Das Ausgangssignal des Filters 124 wird nun den beiden Analog/Digital-Wandlern 126, 128 zugeführt, die das verstärkte, gefilterte, analoge Sensorausgangssignal mittels des sog. Unterabtastungsprinzips mit einer Frequenz abtasten, die einerseits synchron zu der Frequenz des Trägersignals ist und andererseits ein ganzzahliger Teiler der Frequenz des Trägersignals ist. Die Abtastfrequenz wird dabei von dem Signalgenerator 110 in die Analog/Digital-Wandler 126, 128 eingespeist.

Das nach der Abtastung durch den Analog/Digital-Wandler mit Abtast-Halter-Glied in digitaler Form als Folge diskret abgetasteter Werte vorliegende Sensorausgangssignal wird nun in den digitalen Signalprozessor 130 eingespeist, der das Signal aus dem Analog/Digital-Wandler 126 in einer primären Schleife (primary loop) und das Signal aus dem Analog/Digital-Wandler 128 in einer sekundären Schleife (secondary loop) verarbeitet. Der digitale Signalprozessor weist als Komponenten, die softwaremäßig implementiert sind, digitale Bandpaßfilter 132, 134, Demodulatoren 136, 138, 140, 142, digitale Tiefpaßfilter 144, 146, 148, 150, einen Komparator 152, digitale PI-Regler 154, 156, 158, 160, einen Taktgeber 162, einen primären Sinusgenerator 162 und einen sekundären Sinusgenerator 164 auf, die, wie in Fig. 3 dargestellt, angeordnet und verschaltet sind. Der Sinusgenerator 162 ist ausgangsseitig mit einem Digital/Analog-Wandler 168 verbunden, der wiederum mit dem Verstärker 111 verbunden ist. Der sekundäre Sinusgenerator 164 ist ausgangsseitig mit einem Digital/Analog-Wandler 170 und einem Digital/Analog-Wandler 172 verbunden, die wiederum mit dem Eingang 106 bzw. dem Eingang 106' des Sensors 100 verbunden sind. Der Ausgang des digitalen PI-Reglers 158 ist mit einer Ausgangsschnittstelle 174 des digitialen Signalprozessors 130 verbunden, an der das Ausgangssignal, d.h. die zu erfassende Drehrate, in digitaler oder auch analoger Form ausgegeben wird.

Durch die erweiterte Implementierung der digitalen Signalauswertungsanordnung mit einem primären und sekundären Regelkreis kann im Vergleich zu herkömmlichen Anordnungen eine deutlich verbesserte Kompensation von Umgebungseinflüssen, wie z.B. einer Temperaturdrift, vorgenommen werden, so daß eine ausgezeichnete Frequenz- und Amplitudenstabilisierung des Sensorausgangssignals erreicht werden kann.

**Patentansprüche**

1. Verfahren zur Verarbeitung eines analogen Ausgangssignals (S4) eines Sensors (100), wobei das analoge Sensorausgangssignal (S4) ein Trägersignal mit einer Trägerfrequenz $\omega_c$ aufweist, das durch eine Meßgröße amplituden moduliert ist, wobei das Verfahren folgende Schritte aufweist:

   - Abtasten (126, 128) des analogen Sensorausgangssignals (S4) mit einer Abtastfrequenz $\omega_A$, um ein abgetastetes Sensorausgangssignal zu erhalten, wobei die Abtastfrequenz $\omega_A$ des Abtastsignals so eingestellt ist, daß diese ein ganzzahliger Teiler n der Trägerfrequenz $\omega_c$ ist, und wobei die Phase des Abtastsignals so eingestellt ist, daß das Abtastsignal synchron zu dem Trägersignal $\omega_c$ ist.

2. Verfahren nach einem der vorhergehenden Ansprüche, bei dem das Abtastsignal durch eine synchrone Frequenzteilung des Trägersignals erhalten wird, wobei die Trägerfrequenz $\omega_c$ des Trägersignals ein ganzzahliges Vielfaches n der Abtastfrequenz $\omega_A$ ist, wobei gilt: $\omega_c = n\omega_A$.

3. Verfahren nach einem der vorhergehenden Ansprüche, bei dem die Trägerfrequenz $\omega_c$ des Trägersignals auf eine Frequenz eingestellt ist, die größer oder gleich 250 kHz ist.

4. Verfahren nach einem der vorhergehenden Ansprüche, bei dem die Trägerfrequenz $\omega_c$ des Trägersignals um einen Faktor 30

   - 500 höher als die Frequenz $\omega_{drive}$ des Nutzsignals ist.

5. Verfahren nach einem der vorhergehenden Ansprüche, bei dem das analoge Sensorausgangssignal (S4) vor dem Schritt des Abtastens analog verstärkt wird.

6. Verfahren nach einem der vorhergehenden Ansprüche, bei dem das verstärkte analoge Sensorausgangssignal vor dem Schritt des Abtastens hochpassgefiltert wird, um Niederfrequenzanteile in dem Signal (S4) im wesentlichen zu entfernen.

7. Verfahren nach einem der vorhergehenden Ansprüche, bei dem das analoge Sensorausgangssignal (S4) durch die Meßgröße amplitudenmoduliert ist.

8. Verfahren nach einem der vorhergehenden Ansprüche, bei dem die Meßgröße eine Drehrate ist.

9. Verfahren nach einem der vorhergehenden Ansprüche, bei dem der Sensor (100) ein kapazitiver Sensor ist.

10. Verfahren nach Anspruch 9, bei dem der kapazitive Sensor (100) ein kapazitiver Drehratensensor ist.

11. Verfahren nach einem der vorhergehenden Ansprüche, bei dem die Trägersignale an einer Mittelelektrode des Sensors (100) in denselben eingespeist werden, wobei das Sensorausgangssignal an Außenelektroden des Sensors (100) ausgegeben wird.

12. Verfahren nach einem der Ansprüche 1 bis 10, bei dem die Trägersignale an Außenelektroden des Sensors (100) in denselben eingespeist werden, wobei das Sensorausgangssignal an einer gemeinsamen Elektrode (108) des Sensors ausgegeben wird.

13. Verfahren nach einem der vorhergehenden Ansprüche, bei dem das Nutzsignal in einen digitalen Signalprozessor (130) eingegeben wird, wobei der digitale Signalprozessor ein analoges oder digitales Signal ausgibt, das die Meßgröße wiedergibt.

14. Verarbeitungsvorrichtung zum Liefern eines abgetasteten Sensorausgangssignals, mit folgenden Merkmalen:

   einer Einrichtung (110) zum Bereitstellen eines Trägersignals mit einer Trägerfrequenz $\omega_c$;
   einem Sensor (100) zum Erfassen einer Messgröße und zum Ausgeben eines analogen Sensorausgangssignals (S4), wobei dem Sensor (100) das Trägersignal zuführbar ist, wobei das analoge Sensorausgangssignal (S4) das Trägersignal mit der Trägerfrequenz $\omega_c$ aufweist, das durch die Meßgröße amplituden moduliert ist;
   einer Einrichtung (110) zum Bereitstellen eines Abtastsignals mit einer Abtastfrequenz $\omega_A$, wobei die Abtast-

frequenz $\omega_A$ des Abtastsignals so eingestellt ist, daß diese ein ganzzahliger Teiler n der Trägerfrequenz $\omega_c$ ist, und wobei die Phase des Abtastsignals so eingestellt ist, daß das Abtastsignal synchron zu dem Trägersignal ist; und

einer Abtastvorrichtung (126, 128) zum Abtasten des analogen Sensorausgangssignals (S4) mit dem Abtastsignal, um das abgetastete Sensorausgangssignal zu erhalten.

15. Vorrichtung nach Anspruch 14, bei der die Abtastvorrichtung (100) ein Analog/Digital-Wandler mit Abtast-Halte-Glied ist.

**Claims**

1. Method for processing an analogue output signal (S4) of a sensor (100), wherein the analogue sensor output signal (S4) comprises a carrier signal having a carrier frequency $\omega_c$ and being amplitude-modulated by a measurand, wherein the method comprises:

   - sampling (126, 128) of the analogue sensor output signal (S4) using a sampling frequency $\omega_A$ to obtain a sampled sensor output signal, wherein the sampling frequency $\omega_A$ of the sampling signal is set to be an integer divisor n of the carrier frequency $\omega_C$, and wherein the phase of the sampling signal is set so that the sampling signal is synchronous to the carrier signal $\omega_C$.

2. Method according to one of the preceding claims, wherein the sampling signal is obtained by a synchronous frequency division of the carrier signal, wherein the carrier frequency $\omega_C$ of the carrier signal is an integer multiple n of the sampling frequency $\omega_A$, with: $\omega_C = n\omega_A$.

3. Method according to one of the preceding claims, wherein the carrier frequency $\omega_C$ of the carrier signal is set to a frequency which is higher or equal to 250 kHz.

4. Method according to one of the preceding claims, wherein the carrier frequency $\omega_C$ of the carrier signal is higher than the frequency $\omega_{drive}$ of the useful signal by a factor of 30 - 500.

5. Method according to one of the preceding claims, wherein the analogue sensor output signal (S4) is amplified analogously before the step of sampling.

6. Method according to one of the preceding claims, wherein the amplified analogue sensor output signal is high-pass filtered before the step of sampling to essentially remove low-frequency components of the signal (S4).

7. Method according to one of the preceding claims, wherein the analogue sensor output signal (S4) is amplitude-modulated by the measurand.

8. Method according to one of the preceding claims, wherein the measurand is a rotational rate.

9. Method according to one of the preceding claims, wherein the sensor (100) is a capacitive sensor.

10. Method according to claim 9, wherein the capacitive sensor (100) is a capacitive rotational rate sensor.

11. Method according to one of the preceding claims, wherein the carrier signals are fed into the sensor (100) at a center electrode of the same, wherein the sensor output signal is output to exterior electrodes of the sensor (100).

12. Method according to one of claims 1 to 10, wherein the carrier signals are fed into the sensor (100) at exterior electrodes of the same, wherein the sensor output signal is output at a common electrode (108) of the sensor.

13. Method according to one of the preceding claims, wherein the useful signal is input into a digital signal processor (130), wherein the digital signal processor outputs an analogue or a digital signal representing the measurand.

14. Processing device for providing a sampled sensor output signal, comprising:

   means (110) for providing a carrier signal having a carrier frequency $\omega_C$;

a sensor (100) for detecting a measurand and for outputting an analogue sensor output signal (S4), wherein the carrier signal is supplyable to the sensor (100), wherein the analogue sensor output signal (S4) comprises the carrier signal having the carrier frequency $w_C$, which is modulated by the measurand;

means (110) for providing a sampling signal having a sampling frequency $\omega_A$, wherein the sampling frequency $\omega_A$ of the sampling signal is set so that the sampling frequency $\omega_A$ is an integer divisor n of the carrier frequency $\omega_C$, and wherein the phase of the sampling signal is set so that the sampling signal is synchronous to the carrier signal;

sampling means (126, 128) for sampling the analogue sensor output signal (S4) using the sampling signal to obtain the sampled sensor output signal.

**15.** Device according to claim 14, wherein the sampling device (100) is an analogue/digital converter having a sample & hold member.

**Revendications**

**1.** Procédé pour traiter un signal de sortie analogique (S4) d'un capteur (100), le signal de sortie analogique de capteur (S4) présentant un signal porteur à fréquence porteuse $\omega_C$ qui est modulé en amplitude par une grandeur de mesure, le procédé présentant les étapes suivantes:

- balayer (126, 128) le signal de sortie analogique de capteur (S4) à une fréquence de balayage $\omega_A$, pour obtenir un signal de sortie de capteur balayé, la fréquence de balayage $\omega_A$ du signal de balayage étant réglée de sorte qu'elle soit un diviseur de nombre entier n de la fréquence porteuse $\omega_c$, et la phase du signal de balayage étant réglée de sorte que le signal de balayage soit synchrone avec la fréquence porteuse $\omega_c$.

**2.** Procédé selon l'une des revendications précédentes, dans lequel le signal de balayage est obtenu par une division de fréquence synchrone du signal porteur, la fréquence porteuse $\omega_c$ du signal porteur étant un multiple de nombre entier n de la fréquence de balayage $\omega_A$, où vaut: $\omega_c = n\omega_A$.

**3.** Procédé selon l'une des revendications précédentes, dans lequel la fréquence porteuse $\omega_c$ du signal porteur est réglée à une fréquence qui est supérieure ou égale à 250 kHz.

**4.** Procédé selon l'une des revendications précédentes, dans lequel la fréquence porteuse $\omega_c$ du signal porteur est supérieure d'un facteur de 30 à 500 à la fréquence $\omega_{drive}$ du signal utile.

**5.** Procédé selon l'une des revendications précédentes, dans lequel le signal de sortie analogique de capteur (S4) est amplifié de manière analogique avant l'étape de balayage.

**6.** Procédé selon l'une des revendications précédentes, dans lequel le signal de sortie analogique de capteur amplifié est, avant l'étape de balayage, filtré passe-haut, pour éliminer substantiellement les parts de basses fréquences dans le signal (S4).

**7.** Procédé selon l'une des revendications précédentes, dans lequel le signal de sortie analogique de capteur (S4) est modulé en amplitude par la grandeur de mesure.

**8.** Procédé selon l'une des revendications précédentes, dans lequel la grandeur de mesure est un débit de rotation.

**9.** Procédé selon l'une des revendications précédentes, dans lequel le capteur capacitif (100) est un capteur capacitif.

**10.** Procédé selon l'une des revendications précédentes, dans lequel le capteur capacitif (100) est un capteur de débit de rotation capacitif.

**11.** Procédé selon l'une des revendications précédentes, dans lequel les signaux porteurs sont alimentés, à une électrode centrale du capteur (100), dans ce dernier, le signal de sortie de capteur étant sorti à des électrodes extérieures du capteur (100).

**12.** Procédé selon l'une des revendications 1 à 10, dans lequel les signaux porteurs sont alimentés, à des électrodes extérieures du capteur (100), dans ce dernier, le signal de sortie de capteur étant sorti à une électrode commune (108) du capteur.

13. Procédé selon l'une des revendications précédentes, dans lequel le signal utile est entré dans un processeur de signal numérique (130), le processeur de signal numérique sortant un signal analogique ou numérique qui reproduit la grandeur de mesure.

14. Dispositif de traitement pour fournir un signal de sortie de capteur balayé, aux caractéristiques suivantes:

   un moyen (110) destiné à mettre à disposition un signal porteur à fréquence porteuse $\omega_c$;
   un capteur (100) destiné à capter une grandeur de mesure et à sortir un signal de sortie de capteur analogique (S4), le signal porteur pouvant être alimenté vers le capteur (100), le signal de sortie de capteur analogique (S4) présentant le signal porteur à la fréquence porteuse $\omega_c$ qui est modulé en amplitude par la grandeur de mesure;
   un moyen (110) destiné à mettre à disposition un signal de balayage à fréquence de balayage $\omega_A$, la fréquence de balayage $\omega_A$ du signal de balayage étant réglée de sorte qu'elle soit un diviseur de nombre entier n de la fréquence porteuse $\omega_c$, et la phase du signal de balayage étant réglée de sorte que le signal de balayage soit synchrone avec la fréquence porteuse; et
   un dispositif de balayage (126, 128) pour balayer le signal de sortie analogique de capteur (S4) à la fréquence de balayage, pour obtenir le signal de sortie de capteur balayé.

15. Dispositif selon la revendication 14, dans lequel le dispositif de balayage (100) est un convertisseur analogique / numérique à élément de support de balayage.

Fig 1:    Blockschaltbild einer digitalen Auswerteelektronik für ein
kapazitives Sensorelement

EP 1 337 861 B1

Fig. 2A: Abtastvorgang

Dirac-Impuls
$g(t) = \delta(t)$

Rechteck-Impuls
$$g(t) = \frac{\varepsilon(t)-\varepsilon(t-\tau)}{\tau}$$

Fig. 2B: Dirac- und Rechteckimpulse

Multiplizierer

u(t)                  $u_A(t)$

Form-
Filter

$u_a(t)$

Dirac-Impuls

Fig. 2C: Modell eines Abtasters

u(t)        idealer Abtaster        u(t)

t                                        t

Fig 2D: idealer Abtaster

U(f)     ideale Abtastung           U(f)

f                               $f_A$   $2f_A$   f

Fig. 2E: idealer Abtastvorgang in spektraler Betrachtung

S&H($\omega$)

A/2

$\omega$

$\omega_A/2$       $\omega_A$ $\omega_{CS}$ $\omega_{CP}$

$|\omega_A - \omega_{CS}|$   $|\omega_A - \omega_{CP}|$

Fig. 2F: Zwischenmischen mit $f_A < f_{CS} + f_{drive}$

$U_A(\omega)$

n=1    n=0    n=1

u

$\omega$

$\omega_0 = \omega_A$    $2\omega_A$

Fig. 2G: Spektrum einer synchronabgetasteten Cosinusschwingung

Fig. 2H: zeitlicher Verlauf einer synchronabgetasteten Cosinusschwingung

Fig. 2I: Spektrum eines amplitudenmodulierten Signals

Fig. 2J: Spektrum eines synchron-unterabgetasteten amplitudenmodul. Signals

EP 1 337 861 B1

Fig. 2K: Spektrum eines synchron-unterabgetasteten amplitudenmodulierten Signals betrachtet von 0 bis $\omega_A/2$

Fig 2L: Spektrum eines synchron-unterabgetasteten amplitudenmodulierten Signals mit Bandpassfilterung.

EP 1 337 861 B1

Fig 3:  Blockschaltbild einer digitalen Auswerteelektronik für ein kapazitives Sensorelement mit primär und sekundär Regelkreis.

EP 1 337 861 B1

Fig. 5 (Stand der Technik)

Fig. 4

Fig 6: Blockschaltbild einer bekannten analogen Auswerteelektronik für ein kapazitives Sensorelement (Stand der Technik)

EP 1 337 861 B1